# EUROPEAN PATENT APPLICATION

(11) **EP 2 346 260 A1**
(43) Date of publication of application: **20.07.2011**
(21) Application number: 09290891.2
(22) Date of filing: 30.11.2009
(51) Int. Cl.: H04N 7/52, H04N 7/24

(54) **Method for monitoring the synchronization between a video stream and at least one audio stream of a multimedia content**

(71) Applicant: Alcatel Lucent, 75008 Paris (FR)
(72) Inventor: Leprovost, Yann, 91620 Nozay (FR); Martin, Antony, 91620 Nozay (FR)
(74) Representative: Sayettat, Julien Christian

(57) **Abstract**

Method for monitoring the synchronization between a video stream (2, 2a, 2b) and at least one audio stream (3, 3a, 3b) of a multimedia content (4) from a provider (5) in a network (6), said method including the steps of :
- detection of a scene change in the video stream (2, 2a, 2b) ;
- detection of said scene change in the at least one audio stream (3, 3a, 3b) ;
- determination of a phase difference (9) between the scene change detected in the video stream (2, 2a, 2b) and in the at least one audio stream (3, 3a, 3b) ;
establishment of an audio/video desynchronization estimation (12) based on said phase difference.

## Description

The invention relates to a method for monitoring the synchronization between a video stream and at least one audio stream of a multimedia content from a provider in a network and to a system comprising means for implementing such a method.

The use of multimedia contents is increasing, in particular with High Definition sources for Television, such as Internet Protocol TeleVision (IPTV), with Digital Video Broadcasting (DVB) on multimedia handsets over cellular networks or Radio Frequency (RF) networks, or with web 2.0 content providers like Youtube® or DailyMotion®.

At the time being, all of the above mentioned multimedia applications rely on telecommunication networks to transmit their multimedia streams to the terminals of users, said terminals being for example televisions, personal computers or multimedia handsets like lphones®.

As a matter of fact, the severity of monitoring such streams in operational context is also increasing, and one of the main challenges of multimedia streams management is to have an accurate synchronization between audio and video streams to avoid the side effects of desynchronization, i.e. time difference between said audio and video streams.

Some solutions to this problem have already been proposed, as using systems that add additional information in the input streams and use markers or tags to measure and compensate the desynchronization between the audio and the video streams. Such methods are further described in the article available online at http://broadcastengineering.com/test measurement/maintaining-lip-sync.

With those systems, synchronization information is inserted inside the raw streams, as synchronization markers/tags associated to one or both of the audio/video streams. Based on these synchronization tags, it is possible to measure the desynchronization between associated tags.

Then the network part handles compression, framing, transmission; the reception handles decompression and provides the recovered streams to the synchronization tags recovery processes.

However, this solution is inconvenient in a day-to-day operational context. Indeed, the multimedia content from the content provider must be altered to embed the synchronization markers, which can alter the quality provided by said content provider.

For that reason, such techniques are generally used in the initial test phases of Internet Protocol TeleVision (IPTV) solutions, as for example test audio/video patterns, but not after the operational deployment in the Internet Service Providers (ISP) networks.

The invention aims to improve the prior art by proposing a method which enables to have an accurate synchronization between audio and video streams of a raw multimedia content from a provider without modifying said raw multimedia content.

For that purpose, and according to a first aspect, the invention relates to a method for monitoring the synchronization between a video stream and at least one audio stream of a multimedia content from a provider in a network, said method including the steps of :
- detection of a scene change in the video stream ;
- detection of said scene change in the at least one audio stream ;
- determination of a phase difference between the scene change detected in the video stream and in the at least one audio stream ;
- establishment of an audio/video desynchronization estimation based on said phase difference.

According to a second aspect, the invention relates to a system for monitoring the synchronization between a video stream and at least one audio stream of a multimedia content from a provider in a network, said system comprising:
- at least one scene change detection module being adapted to detect a scene change in the video stream and in the at least one audio stream ;
- at least one phase comparator being adapted to determine a phase difference between the scene change detected in the video stream and in the at least one audio stream ;
- a module being adapted to establish an audio/video desynchronization estimation based on said phase difference.

Other aspects and advantages of the invention will become apparent in the following description made with reference to the appended figures, wherein:
- figure 1 represents a functional architecture for a system for monitoring the synchronization according to the invention;
- figure 2 represents an implementation of the synchronization in a network;
- figure 3 represents a local implementation of the synchronization.

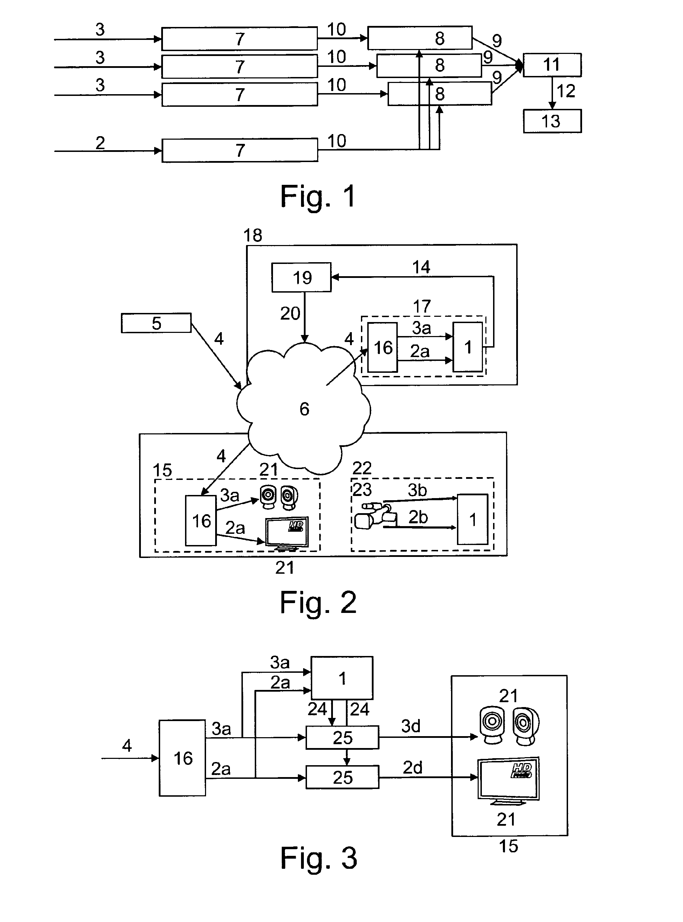

In relation to those figures, a system 1 is provided, said system comprising means for monitoring the synchronization between a video stream 2 and at least one audio stream 3 of a multimedia content 4 from a provider 5 in a network 6. In particular, figure 1 depicts a functional architecture for the system 1.

The system 1 comprises at least one scene change detection module 7 adapted to detect a scene change in the video stream 2 and in the at least one audio stream 3. In the embodiment depicted on figure 1, the system 1 comprises a video scene change detection module 7 and at least one audio scene change detection module 7, said modules being adapted to process the video stream 2 and the at least one audio stream 3 respectively.

The use of state-of-the art techniques to detect a scene change in a video stream 2 is well-known by the man skilled in the art and relatively widespread in video processing. In particular, such a technique can be implemented in a video compression algorithm or a video database indexing algorithm. Such improved video scene change algorithms are further detailed in the article "Content-based Representation and Retrieval of Visual Media: A state-of-the-art Review" (http://citeseerx.ist.psu.edu/viewdoc/summary?doi=10.1.1.100.7131).

Concerning the scene change detection in an audio stream 3, the audio scene change detection module 7 can comprise means to use an improved algorithm as those further depicted in the article "Audio as a Support to Scene Change Detection and Characterization of Video Sequences" (http://ieexplore.ieee.org/stamp/stamp.jsp?arnumber=00595320&tp=).

The system 1 comprises at least one phase comparator 8 adapted to determine a phase difference 9 between the scene change detected in the video stream 2 and in the at least one audio stream 3. According to the embodiment of the figure 1, the system 1 comprises as many phase comparators 8 as audio scene change detection modules 7, each of said phase comparators cooperating with the video scene change detection module 7 and with one of the audio scene change detection modules 7.

The scene change detections can be implemented by providing temporal digital signals 10 comprising pulses to identify said scene change.

To do so, the scene change detection modules 7 comprise means for computing temporal digital signals 10 comprising pulses to identify scene change detection, the phase comparators 8 comprising means to determine phase differences 9 between said pulses.

The system 1 comprises a module 11 adapted to establish an audio/video desynchronization estimation 12 based on the phase difference 9.

The multimedia content 4 can comprise several audio streams 3, as for instance audio streams 3 of different languages. The method of the invention can also enable to use at least two of the audio streams 3 to establish the audio/video desynchronization estimation 12.

To do so, the scene change is detected in at least two of the audio streams 3 and a phase difference 9 is determined between the video scene change and each of said audio scene change. The module 11 adapted to establish the audio/video desynchronization estimation 12 comprises means to average phases differences 9 between the scene change detected in the video stream 2 and in each of the audio streams 3 to establish said estimation based on said average.

In addition, the method of the invention can provide for resynchronizing the multimedia content 4. To do so, in relation with figure 1, the system 1 comprises a module 13 adapted to resynchronize the multimedia content 4. In particular, the module 13 can comprise means for comparing the audio/video desynchronization estimation 12 to an acceptable value.

The acceptable value can be for instance predefined by the network administrator and can also consist in an acceptable desynchronization range until which the multimedia content 4 does not have to be resynchronized. In addition, the module 13 can further comprise means to trigger the resynchronization of the multimedia content 4 when the audio/video desynchronization estimation 12 is greater than the acceptable value.

According to figure 2, the module 13 adapted to resynchronize the multimedia content 4 (not shown on this figure) can comprise means for establishing a resynchronization trap 14 comprising said estimation, said trap being sent to a dedicated entity in order to resynchronize the multimedia content 4.

In a first embodiment, the method of the invention can be used for monitoring the synchronization of a compressed multimedia content 4 from a provider 5 upstream from the reception of said multimedia content by a terminal 15, especially by a multimedia decoder 16 implemented in said terminal.

In this first embodiment, as depicted on the top frame of figure 2, the system 1 can be embedded in a audio/video desynchronization network monitor device 17 owned by the network operator 18 of the network 6, said monitor device further comprising a multimedia decoder 16 for receiving the compressed multimedia content 4 and decoding said content before forwarding said decoded content to the system 1.

In that case, the scene change is respectively detected in a decoded video track 2a and in a decoded audio track 3a, said decoded tracks being output from the multimedia decoder 16 of the monitor device 17.

When the audio/video desynchronization estimation 12 is greater than the predefined acceptable value, the module 13 sends a resynchronization trap 14 to a network management entity 19, said trap comprising said estimation in order for said entity to be able to use said estimation for resynchronizing the multimedia content 4.

In particular, the resynchronization trap 14 can be a Simple Network Management Protocol (SNMP) trap delivered to the network management entity 19.

Afterwards, the resynchronized multimedia content 20 is provided by the network management entity 19 to the network 6, said network making said content available for the terminals 15 connected to said network.

According to a second embodiment, the method of the invention can be used for monitoring the synchronization of a compressed multimedia content 4 from a provider 5 downstream from the reception of said multimedia content by a multimedia decoder 16 implemented in a terminal 15.

In particular, this second embodiment can take place after the realisation of the above described first embodiment, the method of the invention being also used for monitoring the synchronization of a compressed multimedia content 4 that have been previously resynchronized by the network monitoring device 19.

This above mentioned variant of the second embodiment enables to take into account the differences between the terminals 15 connected to the network 6, as for example the quality of the multimedia equipments available on said terminals and/or the quality of the reception of the multimedia content 4 on said terminals, such differences often causing discrepancies between the terminals 15 as regards the desynchronization of said received content.

In this second embodiment and its variant, the scene change can be detected in a video stream 2b and in an audio stream 3b captured from a terminal 15 receiving the multimedia content 4, especially from equipments 21 connected with said terminal, such as a set-top box, the speakers and/or the screen of said terminal.

To do so, as depicted on the bottom frame of figure 2, a system 1 of the invention can be embedded in an independent desynchronization measurement device 22, said device further comprising dedicated capturing devices 23 such as a microphone and/or a videocamera.

The scene change detection modules 7 of the system 1 can further comprise means for capturing the video stream 2b and the audio stream 3b played on the terminal 15 receiving the multimedia content 4, said means cooperating with the capturing devices 23 of the measurement device 22.

According to other embodiments, the method of the invention can provide for resynchronizing locally the multimedia content 4 by using the audio/video desynchronization estimation 12. To do so, the module 13 can comprise means to resynchronize locally the multimedia content 4 by using the audio/video desynchronization estimation 12.

The figure 3 depicts such an embodiment, in which the module 13 of the system 1 (not shown on the figure) computes at least two specific compensation delays 24, said delays being respectively sent to separate buffers 25 to compensate the desynchronization between the video stream 2a and the audio stream 3a output from a multimedia decoder 16.

Thus, the resynchronized video stream 2d and the resynchronized audio stream 3d are sent to the multimedia equipments 21 of the terminal 15.

The ensemble formed by the system 1, the multimedia decoder 16 and the separate buffers 25 can be embedded in the network monitor device 17 of the top frame on figure 2, which enables to avoid the intervention of the network management entity 19, said intervention being triggered by the sending on the resynchronization trap 14 in said figure.

According to a variant of this embodiment, the above described ensemble can also be embedded in separate means in a terminal 15 receiving a multimedia content 4, said terminal being also able to resynchronize locally said content.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for monitoring the synchronization between a video stream (2, 2a, 2b) and at least one audio stream (3, 3a, 3b) of a multimedia content (4) from a provider (5) in a network (6), said method including the steps of :
- detection of a scene change in the video stream (2, 2a, 2b) ;
- detection of said scene change in the at least one audio stream (3, 3a, 3b) ;
- determination of a phase difference (9) between the scene change detected in the video stream (2, 2a, 2b) and in the at least one audio stream (3, 3a, 3b) ;
- establishment of an audio/video desynchronization estimation (12) based on said phase difference.

2. Method for monitoring according to claim 1, **characterized in that** the multimedia content (4) comprises several audio streams (3, 3a), the scene change being detected in at least two of said audio streams and a phase difference (9) being determined between the video scene change and each of said audio scene change, the audio/video desynchronization estimation (12) being established based on an average of said phase differences.

3. Method for monitoring according to claim 1 or 2, **characterized in that** the scene change is respectively detected in a decoded video track (2a) and in a decoded audio track (3a).

4. Method for monitoring according to claim 1 or 2, **characterized in that** the scene change is respectively detected in a video stream (2b) and an audio stream (3b) captured from a terminal (15) receiving the multimedia content (4).

5. Method for monitoring according to any of claims 1 to 4, **characterized in that** the scene change detections are implemented by providing temporal digital signals (10) comprising pulses to identify said scene change.

6. Method for monitoring according to any of claims 1 to 5, **characterized in that** it provides for resynchronizing the media content (4) by comparing the audio/video desynchronization estimation (12) to an acceptable value, the resynchronization of said multimedia content being triggered when said estimation is greater than said value.

7. Method for monitoring according to claim 6, **characterized in that** it provides for sending a resynchronization trap (14) to a network management entity (19), said trap comprising the audio/video desynchronization estimation (12) in order for said entity to be able to use said estimation for resynchronizing the multimedia content (4).

8. Method for monitoring according to claim 6, **characterized in that** it provides for resynchronizing locally the multimedia content (4) by using the audio/video desynchronization estimation (12).

9. System (1) for monitoring the synchronization between a video stream (2, 2a, 2b) and at least one audio stream (3, 3a, 3b) of a multimedia content (4) from a provider (5) in a network (6), said system comprising :
- at least one scene change detection module (7) being adapted to detect a scene change in the video stream (2, 2a, 2b) and in the at least one audio stream (3, 3a, 3b) ;
- at least one phase comparator (8) being adapted to determine a phase difference (9) between the scene change detected in the video stream (2, 2a, 2b) and in the at least one audio stream (3, 3a, 3b) ;
- a module (11) being adapted to establish an audio/video desynchronization estimation (12) based on said phase difference.

10. System (1) for monitoring according to claim 9, **characterized in that** the module (11) adapted to establish the audio/video desynchronization estimation (12) comprises means to average phase differences (9) between the scene change detected in the video stream (2, 2a) and in each of the audio streams (3, 3a) and means to establish said estimation based on said average.

11. System (1) for monitoring according to claim 9 or 10, **characterized in that** the scene change detection module (7) comprises means for capturing the video stream (2b) and the audio stream (3b) played on a terminal (15) receiving the multimedia content (4).

12. System for monitoring according to any of claims 9 to 11, **characterized in that** scene change detection module (7) comprises means for computing a temporal digital signal (10) comprising pulses to identify scene change, the phase comparator (8) comprising means to determine a phase difference (9) between said pulses.

13. System for monitoring according to any of claims 9 to 12, **characterized in that** it further comprises a module (13) adapted to resynchronize the multimedia content (4), said module comprising means for comparing the audio/video desynchronization estimation (12) to an acceptable value and means to trigger the resynchronization of the multimedia content (4) when said estimation is greater than said value.

14. System for monitoring according to claim 13, **characterized in that** the module (13) adapted to resynchronize the multimedia content (4)comprises means for establishing a resynchronization trap (14) comprising the estimation (12).

15. System for monitoring according to claim 13, **characterized in that** the module (13) adapted to resynchronize the multimedia content (4) comprises means to resynchronize locally the multimedia content (4) by using the audio/video desynchronization estimation (12).
